# FASCICULE DE BREVET EUROPEEN

(11) **EP 2 817 163 B1**
(45) Date de publication et mention de la délivrance du brevet: **06.03.2019**
(21) Numéro de dépôt: 13703411.2
(22) Date de dépôt: 11.02.2013
(51) Int. Cl.: B60H 1/00, B60H 1/22

(54) **DISPOSITIF DE CONDITIONNEMENT THERMIQUE D'UN HABITACLE ET D'UNE CHAINE DE TRACTION D'UN VEHICULE**
VORRICHTUNG ZUM WÄRMEMANAGEMENT EINER KABINE UND DES ANTRIEBSSTRANGS EINES FAHRZEUGS
DEVICE FOR THE THERMAL MANAGEMENT OF A CABIN AND OF A DRIVETRAIN OF A VEHICLE

(30) Priorité: 24.02.2012 FR 1251729
(43) Date de publication de la demande: 31.12.2014
(73) Titulaire: Valeo Systèmes Thermiques, 78321 Le Mesnil-Saint-Denis (FR)
(72) Inventeur: SAAB, Samer, F-75015 Paris (FR); AOUN, Bernard, F-75013 Paris (FR)
(74) Mandataire: Metz, Gaëlle
(86) Numéro de dépôt international: PCT/EP2013/052624
(87) Numéro de publication internationale: WO 2013/124173

(56) Documents cités:
- WO-A1-2011/076199
- WO-A1-2012/021104
- FR-A1- 2 949 386
- US-A1- 2010 012 295
- US-A1- 2010 155 018

## Description

Le secteur technique de la présente invention est celui des véhicules dont le déplacement est assuré par au moins un moteur électrique. Ce secteur englobe ainsi les véhicules électriques, c'est-à-dire propulsés uniquement par un moteur électrique, et les véhicules hybrides, c'est-à-dire propulsés par un moteur électrique et par un moteur à combustion interne. Plus particulièrement, l'invention vise le système de conditionnement thermique de l'habitacle d'un tel véhicule ainsi que le conditionnement thermique d'au moins un composant électrique constitutif de la chaîne de traction électrique du véhicule.

La raréfaction des ressources pétrolières conduit les constructeurs automobiles à développer des véhicules qui fonctionnent à partir de nouvelles sources d'énergie. La propulsion du véhicule par l'énergie électrique est une solution qui représente une alternative intéressante. Cependant, l'absence d'un moteur à combustion interne, ou l'indisponibilité de celui-ci pour les véhicules hybrides, prive le véhicule d'une source d'énergie pour assurer le conditionnement thermique de l'habitacle, en particulier le chauffage.

Pour contourner ce défaut, il a été proposé d'utiliser une boucle de climatisation classique activée par un compresseur, et dont la circulation du fluide réfrigérant est organisée pour chauffer ou refroidir un flux d'air envoyé dans l'habitacle du véhicule. La boucle de climatisation fonctionne ainsi selon un mode de refroidissement où un évaporateur abaisse la température du flux d'air envoyé dans l'habitacle alors qu'un condenseur placé en face avant du véhicule assure le refroidissement du fluide réfrigérant en évacuant les calories dans un flux d'air extérieur à l'habitacle. La boucle de climatisation fonctionne également dans un mode de chauffage, connu sous le nom de pompe à chaleur, où l'évaporateur prend la fonction du condenseur en assurant un chauffage du flux d'air envoyé dans l'habitacle. Le condenseur placé en face avant assure la fonction d'évaporation, le flux d'air extérieur étant refroidi par son passage au travers du

La disposition du condenseur en face avant du véhicule représente un inconvénient. En effet, la place disponible en face avant devient extrêmement limitée en raison de l'implantation d'autres composants nécessaires à la chaîne de traction électrique. Il devient donc nécessaire d'organiser les échanges thermiques de manière différente, tout en assurant la fonction de chauffage et la fonction de refroidissement par des moyens les plus simples possibles.

Par ailleurs, la durée de vie et les performances des composants de la chaîne de traction électrique, en particulier les batteries, sont conditionnées par la température du milieu environnant le composant. Il est donc nécessaire de garantir un maintien à une température déterminée de ces composants quelle que soit la température extérieure au véhicule. Il faut donc garantir au moins un chauffage de ces batteries quand cette température extérieure passe en dessous d'un seuil qui risque de nuire à leur bon fonctionnement.

Le document FR 2 949 386 A1 divulgue un dispositif de conditionnement thermique d'un habitacle de véhicule et d'au moins un composant électrique d'une chaîne de traction électrique dudit véhicule, comprenant un circuit de fluide caloporteur parcouru par un fluide caloporteur et comprenant au moins
- une première boucle constituée au moins par une première pompe, une source de chaleur et un échangeur de chaleur intérieur apte à chauffer l'habitacle,
- une deuxième boucle en parallèle de la première boucle et interconnectée avec celle-ci par un premier dispositif d'interconnexion, la deuxième boucle comprenant au moins un premier échangeur du composant électrique,
la source de chaleur formant une même source de chaleur apte à chauffer le fluide caloporteur qui circule dans la première boucle et/ou dans la deuxième boucle.

Ce dispositif apporte une solution simple et économique qui permet de chauffer à la fois l'habitacle et les batteries à l'aide d'un seul et même moyen qui puise son énergie notamment sur le réseau électrique du véhicule.

Un tel dispositif est donc particulièrement simple à mettre en oeuvre puisqu'il emploi un même composant pour réaliser deux fonctions de chauffage distinctes ou combinées.

Dans ce dispositif connu, la source de chaleur est une source électrique de chaleur.

Dans ce dispositif connu, la source électrique de chaleur est installée dans la première boucle de fluide caloporteur en amont du premier dispositif d'interconnexion.

Ce dispositif connu comprend un circuit de fluide réfrigérant parcouru par un fluide réfrigérant, le circuit de fluide réfrigérant comprenant au moins un compresseur et un évaporateur.

Dans ce dispositif connu, la source électrique de chaleur est installée dans la première boucle en amont du premier dispositif d'interconnexion. Le fluide caloporteur ainsi chauffé est donc immédiatement à disposition des éléments susceptibles de dissiper ces calories.

La présente invention propose un dispositif de conditionnement thermique d'un habitacle de véhicule selon la revendication 1. De manière complémentaire, le dispositif de conditionnement thermique comprend un deuxième échangeur de chaleur fluide/fluide, c'est à dire fluide caloporteur/fluide réfrigérant, installé dans le circuit de fluide réfrigérant et dans la deuxième boucle.

Chacun de ces échangeurs est apte à transférer des calories d'un fluide à l'autre, sans échange forcé avec un flux d'air.

Dans un tel cas, le premier échangeur de chaleur fluide/fluide est agencé pour réaliser un échange thermique entre le fluide caloporteur circulant dans la première boucle et le fluide réfrigérant circulant dans le circuit de fluide réfrigérant.

Le premier échangeur de chaleur fluide/fluide est ainsi localisé dans la première boucle de fluide caloporteur entre une sortie de la première pompe et une entrée de la source électrique de chaleur.

Selon encore une caractéristique de l'invention, le premier échangeur de chaleur fluide/fluide est localisé dans le circuit de fluide réfrigérant immédiatement en aval d'une sortie du compresseur. Ce premier échangeur remplit donc un rôle de condenseur, et plus généralement de refroidisseur de gaz, pour le cycle thermodynamique qui prend place dans le circuit de fluide réfrigérant.

Le deuxième échangeur de chaleur fluide/fluide est agencé pour réaliser un échange thermique entre le fluide caloporteur circulant dans la deuxième boucle de fluide caloporteur et le fluide réfrigérant circulant dans le circuit de fluide réfrigérant.

Avantageusement, le deuxième échangeur de chaleur fluide/fluide est installé dans une branche de la deuxième boucle, cette branche étant en parallèle d'une portion de la deuxième boucle qui comprend le premier échangeur de composant électrique.

La deuxième boucle de fluide caloporteur peut comprendre une deuxième pompe installée en amont du premier échangeur de composant électrique et en parallèle d'une branche de la deuxième boucle contenant le deuxième échangeur de chaleur fluide/fluide.

Dans une telle situation, la branche est raccordée à une portion de la deuxième boucle qui comprend le premier échangeur de composant électrique par un deuxième dispositif d'interconnexion.

Selon un exemple de réalisation, le circuit de fluide réfrigérant comprend une branche centrale contenant le premier échangeur de chaleur fluide/fluide, une première branche latérale contenant le deuxième échangeur de chaleur fluide/fluide et une deuxième branche latérale contenant l'évaporateur, la branche centrale, la première branche latérale et la deuxième branche latérale étant en parallèle.

Selon une variante de l'invention, le dispositif comprend une troisième boucle de fluide caloporteur en parallèle de la deuxième boucle de fluide caloporteur, ladite troisième boucle comprenant au moins un deuxième échangeur de composant électrique de la chaîne de traction électrique.

Dans une telle situation, la troisième boucle de fluide caloporteur comprend un premier secteur dans lequel sont installés en série le deuxième échangeur de composant électrique et une troisième pompe, et un deuxième secteur comprenant un premier radiateur, le premier secteur étant en parallèle du deuxième secteur et relié à celui-ci par un troisième dispositif d'interconnexion.

Selon une variante de l'invention, le dispositif de conditionnement thermique comprend une quatrième boucle de fluide caloporteur en parallèle de la première boucle de fluide caloporteur, ladite quatrième boucle comprenant au moins un circuit de refroidissement d'un moteur à combustion interne.

Dans cette situation, la quatrième boucle de fluide caloporteur comprend une première portion dans laquelle sont installés en série le circuit de refroidissement du moteur à combustion interne et une quatrième pompe, et une deuxième portion comprenant un deuxième radiateur, la deuxième portion étant en parallèle de la première portion et reliée à celle-ci par un quatrième dispositif d'interconnexion.

Un tout premier avantage selon l'invention réside dans la possibilité de réaliser un apport de calories soit à l'habitacle, soit aux batteries ou à ces deux composants simultanément à partie d'une même source électrique de chaleur judicieusement installée dans le dispositif selon l'invention. On évite ainsi d'avoir recours à deux sources de chaleur additionnelles dédiées à l'un et l'autre de ces composants.

Un autre avantage réside dans la possibilité de récupérer des calories générées par des composants électriques de la chaîne électrique de traction en vue de les exploiter dans le cycle thermodynamique qui prend place au coeur du circuit de fluide réfrigérant. Cette récupération d'énergie fournit un point chaud avec lequel le fluide réfrigérant peut échanger, ce qui se traduit par une augmentation de l'échange thermique dans le condenseur. Ces calories échangées sont alors transférées au fluide caloporteur présent dans la première boucle, puis au flux d'air envoyé dans l'habitacle. On met ainsi à disposition les calories dissipées par les composants électriques pour les rendre disponibles au niveau du flux d'air intérieur.

D'autres caractéristiques, détails et avantages de l'invention ressortiront plus clairement à la lecture de la description donnée ci-après à titre indicatif en relation avec des dessins dans lesquels :
- la figure 1 est une vue schématique du dispositif de conditionnement thermique selon l'invention, hors fonctionnement,
- la figure 2 est une vue schématique du dispositif représenté à la figure 1 utilisé selon un premier mode de chauffage de l'habitacle,

- la figure 3 est une vue schématique du dispositif représenté à la figure 1 utilisé selon un mode de chauffage d'un composant électrique,
- la figure 4 est une vue schématique du dispositif représenté à la figure 1 qui combine l'utilisation selon le premier mode de chauffage de l'habitacle et selon le mode de chauffage d'un composant électrique,
- la figure 5 est une vue schématique du dispositif de conditionnement thermique selon une première variante, utilisé selon un deuxième mode de chauffage de l'habitacle,
- la figure 6 est une vue schématique du dispositif de conditionnement thermique selon la première variante, utilisé selon un troisième mode de chauffage de l'habitacle,
- la figure 7 est une vue schématique du dispositif de conditionnement thermique selon la première variante, utilisé selon un quatrième mode de chauffage de l'habitacle,
- la figure 8 est une vue schématique du dispositif de conditionnement thermique selon la première variante, utilisé selon un cinquième mode de chauffage de l'habitacle.

Il faut noter que les figures exposent l'invention de manière détaillée pour mettre en oeuvre l'invention, lesdites figures pouvant bien entendu servir à mieux définir l'invention le cas échéant.

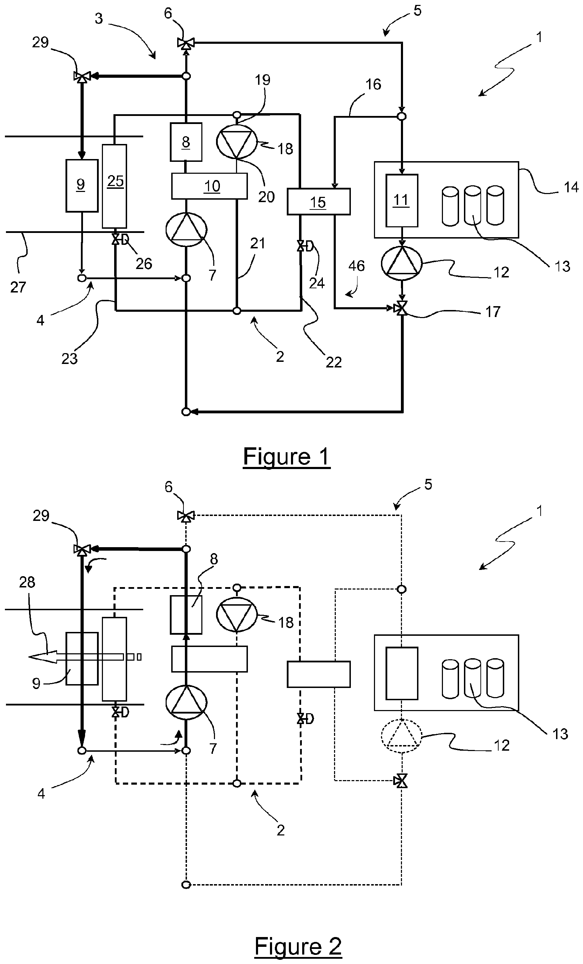

Dans les figures 2 à 8 détaillant la présente invention et décrites ci-dessous, il a été adopté comme convention qu'une circulation de fluide est représentée en trait continu, alors qu'une absence de circulation de fluide est représentée en trait interrompu.

Dans la description qui suit, les termes amont ou aval sont employés. Ceux-ci s'analysent à la lumière du sens de circulation du fluide concerné dans la portion de circuit recevant le composant ainsi qualifié. Le sens de circulation du fluide réfrigérant et du fluide caloporteur est représenté par des flèches mentionnées sur les figures, en fonction du mode de fonctionnement particulier.

Les termes série et parallèle sont également utilisés pour définir le positionnement d'un élément par rapport à un autre élément, notamment des portions de circuit ou de boucle, des composants ou des échangeurs de chaleur. Par parallèle, on entend une disposition d'éléments où le fluide concerné qui traverse un premier élément est différent de celui qui traverse un deuxième élément, le fluide étant de même nature. Par série, on entend une disposition des composants où le fluide traverse successivement le premier élément, puis le deuxième élément.

La figure 1 illustre le dispositif de conditionnement thermique 1 selon l'invention qui comprend un circuit de fluide réfrigérant 2 et un circuit de fluide caloporteur 3. Un tel dispositif de conditionnement thermique 1 assure la gestion thermique de l'habitacle d'un véhicule, en chauffant ou refroidissant ce dernier en fonction d'une demande d'un utilisateur du véhicule.

Ce dispositif de conditionnement thermique assure également la gestion thermique d'un ou plusieurs composants constitutifs d'une chaîne de traction électrique embarquée sur le véhicule. Pour ce faire, le circuit de fluide caloporteur comprend divers échangeurs thermiques chargés de réaliser un échange thermique entre le composant concerné et le fluide caloporteur qui circule dans le circuit de fluide caloporteur.

A titre d'exemple, le fluide caloporteur est de l'eau additionnée de glycol.

Le circuit de fluide caloporteur 3 est un circuit fermé constitué d'une première boucle 4 de fluide caloporteur et d'une deuxième boucle 5 de fluide caloporteur en liaison mutuelle l'une à l'autre par un premier dispositif d'interconnexion 6. Le premier dispositif d'interconnexion 6 est réalisé, par exemple, sous la forme d'une vanne deux voies ou d'une vanne trois voies.

Ainsi, en fonction du mode de fonctionnement du dispositif de conditionnement thermique, la première boucle 4 et/ou la deuxième boucle 5 de fluide caloporteur peuvent opérer de manière indépendante ou de manière conjointe.

La première boucle 4 de fluide caloporteur forme un circuit dans lequel se trouvent au moins une première pompe 7, une source électrique de chaleur 8 et un échangeur de chaleur intérieur 9.

La première pompe 7 est, par exemple, une pompe électrique.

La source de chaleur électrique 8 forme une source de chauffage destinée à chauffer le fluide caloporteur. Selon un exemple de réalisation, la source électrique de chaleur est un radiateur électrique, comprenant un ou plusieurs éléments chauffants à effet CTP (Coefficient de Température Positif).

L'échangeur de chaleur intérieur 9 est un échangeur thermique air/fluide caloporteur destiné à dissiper les calories transportées par le fluide caloporteur dans le flux d'air envoyé à l'intérieur de l'habitacle. C'est pour cette raison que cet échangeur thermique est qualifié d' « intérieur ».

Le dispositif de conditionnement thermique 1 comprend encore un premier échangeur de chaleur fluide/fluide 10 agencé pour réaliser un échange thermique entre le fluide caloporteur circulant dans la première boucle 4 de fluide caloporteur et le fluide réfrigérant circulant dans le circuit de fluide réfrigérant 2. On comprend donc que ce premier échangeur de chaleur fluide/fluide 10 constitue au moins en partie un élément de la première boucle 4 de fluide caloporteur.

De manière avantageuse, la première boucle 4 de fluide caloporteur comprend un moyen d'arrêt 29 dont la fonction est d'autoriser ou d'interdire la circulation de fluide caloporteur en direction de l'échangeur de chaleur intérieur 9. Selon un exemple de réalisation, un tel moyen d'arrêt 29 et le premier dispositif d'interconnexion 6 peuvent former une seule et unique pièce installée à une confluence de la première boucle 4 de fluide caloporteur avec la deuxième boucle 5 de fluide caloporteur.

La deuxième boucle 5 de fluide caloporteur est une boucle qui est installée en parallèle de la première boucle 4 de fluide caloporteur. La portion du circuit de fluide caloporteur qui comprend la première pompe 7, le premier échangeur de chaleur fluide/fluide 10 et la source électrique de chaleur est commune à la première boucle 4 et à la deuxième boucle 5.

Cette deuxième boucle 5 de fluide caloporteur comprend un premier échangeur de composant électrique 11 et avantageusement une deuxième pompe 12, chargée de mettre en circulation le fluide caloporteur dans la deuxième boucle 5 de fluide caloporteur. Cette deuxième pompe est avantageusement une pompe électrique.

Le premier échangeur 11 de composant électrique est un échangeur de chaleur entre le fluide caloporteur et un composant électrique de la chaîne de traction électrique du véhicule. En particulier, ce composant est une batterie 13, ou un pack de batteries 13, référencé 14, nécessaires pour stocker l'énergie électrique utilisée pour un déplacement du véhicule. Selon l'exemple de réalisation présenté, le premier échangeur 11 de composant électrique est intégré à l'intérieur du pack de batteries 14 et est raccordé directement à la deuxième pompe 12.

A titre d'exemple, le composant électrique de la chaîne de traction électrique peut être le moteur électrique de traction, un convertisseur prenant, par exemple, la forme d'un onduleur ou d'un abaisseur de tension.

La deuxième boucle 5 de fluide caloporteur comprend encore, au moins en partie, un deuxième échangeur de chaleur fluide/fluide 15 agencé pour réaliser un échange thermique entre le fluide caloporteur circulant dans la deuxième boucle 5 et le fluide réfrigérant circulant dans le circuit de fluide réfrigérant 2.

Ce deuxième échangeur de chaleur fluide/fluide 15 est installé en parallèle du premier échangeur 11 de composant électrique et de la deuxième pompe 12, au moyen d'une branche 16 qui contourne le pack de batteries 14. La circulation de fluide caloporteur au travers du deuxième échangeur de chaleur fluide/fluide 15 et/ou au travers du premier échangeur 11 de composant électrique est organisée au moyen d'un deuxième dispositif d'interconnexion 17. Ce dernier peut être formé, notamment, par une vanne deux voies ou par une vanne trois voies installée à l'un ou l'autre des points de jonction entre la branche 16 et la portion de circuit de la deuxième boucle 5 de fluide caloporteur qui comprend le premier échangeur 11 de composant électrique. Cette portion est appelée ci-après sous-circuit 46.

On comprend de la description qui précède que le fluide caloporteur qui circule au travers de la source électrique de chaleur 8 peut circuler selon l'une quelconque des configurations suivantes :
- seulement dans la première boucle 4 de fluide caloporteur, c'est-à- dire vers l'échangeur de chaleur intérieur 9,
- seulement dans la deuxième boucle 5 de fluide caloporteur, c'est-à-dire vers le premier échangeur 11 de composant électrique,
- à la fois dans la première et la deuxième boucle de fluide caloporteur.

Une même source électrique de chaleur peut ainsi assurer la fonction de chauffage de l'habitacle et la fonction de chauffage de ou des batteries servant à la traction du véhicule.

En ce qui concerne le circuit de fluide réfrigérant 2, on notera qu'il s'agit d'une boucle fermée à l'intérieur de laquelle un fluide réfrigérant circule. Ce fluide réfrigérant est du type sous-critique comme par exemple un composé fluoré, notamment le R134a, mais il peut également s'agir d'un fluide de type supercritique comme par exemple le dioxyde de carbone connu sous la référence R744.

Le fluide réfrigérant est mis en circulation au sein du circuit de fluide réfrigérant par un compresseur, 18 dont la fonction est d'augmenter la pression et corrélativement la température du fluide réfrigérant. Le sens de circulation du fluide réfrigérant est identique quel que soit le mode d'utilisation du dispositif de conditionnement thermique 1 selon l'invention, c'est-à-dire un mode refroidissement, plusieurs modes de chauffage du flux d'air intérieur envoyé dans l'habitacle du véhicule et un mode de récupération d'énergie du flux d'air intérieur.

Le compresseur 18 peut être un compresseur mécanique entraîné par le moteur à combustion interne d'un véhicule hybride, mais l'invention trouve une application particulière dans l'emploi d'un compresseur électrique.

Ce compresseur électrique est de type haute tension, c'est-à-dire adapté pour fonctionner selon une tension comprise entre 350 Volts et 500 Volts. Ce compresseur est, par exemple, du type à pistons, à palettes ou à spirales et son contrôle peut être interne ou externe, c'est-à-dire embarqué sur le compresseur ou intégré sur un contrôleur distinct du compresseur.

Le compresseur 18 comprend un orifice d'entrée 19 par lequel arrive le fluide réfrigérant et un orifice de sortie 20 par lequel le fluide réfrigérant ainsi comprimé est évacué. Cette orifice de sortie 20 est raccordé au premier échangeur de chaleur fluide/fluide 10.

Cet échangeur de chaleur fluide réfrigérant/fluide caloporteur 10 est un échangeur thermique dont la fonction est de réaliser un échange thermique entre le fluide réfrigérant qui circule dans le circuit de fluide réfrigérant 2 et le fluide caloporteur qui circule dans la première boucle 4 de fluide caloporteur. Il s'opère ainsi un transfert de calories d'un fluide vers l'autre.

Selon le mode de fonctionnement, ce premier échangeur de chaleur fluide/fluide 10 est un condenseur, ou refroidisseur de gaz.

Le compresseur 15 et le premier échangeur de chaleur fluide/fluide 10 sont installés dans une branche centrale 21 constitutive du circuit de fluide réfrigérant 2. Ce dernier comprend encore une première branche latérale 22 et une deuxième branche latérale 23. On notera que la branche centrale 21, la première branche latérale 22 et la deuxième branche latérale 23 sont en parallèle les unes par rapport aux autres.

La première branche latérale 22 reçoit, au moins en partie, le deuxième échangeur de chaleur fluide/fluide 15. Il s'opère ainsi un échange thermique entre le fluide réfrigérant qui circule dans le circuit de fluide réfrigérant 2 et le fluide caloporteur qui circule dans la deuxième boucle 5 de fluide caloporteur.

Avantageusement, la première branche latérale 22 comprend encore premier un organe de régulation 24 capable, d'une part, d'interrompre la circulation de fluide réfrigérant au travers de la première branche latérale 22, et d'autre part d'assurer un abaissement de la pression du fluide réfrigérant avant son entrée dans le deuxième échangeur de chaleur fluide/fluide 15. Dans ce dernier cas, l'organe de régulation 24 devient un organe de détente qui peut prendre la forme d'un détendeur thermostatique ou d'un détendeur électronique. Ce premier organe de régulation 24 est installé en amont, avantageusement directement, du deuxième échangeur de chaleur fluide/fluide 15.

La deuxième branche latérale 23 comprend un évaporateur 25 destiné à refroidir le flux d'air intérieur, par exemple en mode de refroidissement ou en un mode de déshumidification. Cette deuxième branche comprend encore un deuxième organe de régulation 26 capable, d'une part, d'interrompre la circulation de fluide réfrigérant au travers de la deuxième branche latérale 23, et d'autre part d'assurer un abaissement de la pression du fluide réfrigérant avant son entrée dans l'évaporateur 25. Dans ce dernier cas, l'organe de régulation 26 devient un organe de détente qui peut prendre la forme d'un détendeur thermostatique ou d'un détendeur électronique. Ce deuxième organe de régulation 26 est installé en amont, avantageusement directement, de l'évaporateur 25.

On notera que l'évaporateur 25 et l'échangeur de chaleur intérieur 9 sont tous deux installés à l'intérieur d'un boîtier d'une installation de ventilation, chauffage et/ou climatisation du véhicule. Un tel boîtier est représenté de manière schématique et porte la référence 27. Ce boîtier canalise le flux d'air intérieur envoyé dans l'habitacle du véhicule.

La figure 2 montre le dispositif de conditionnement thermique 1 détaillé en référence à la figure 1, utilisé selon un premier mode de chauffage de l'habitacle. Une telle situation correspond au cas dans lequel la température de la batterie est au-dessus d'une température minimale en dessous de laquelle il devient nécessaire de la chauffer. Le premier dispositif d'interconnexion 6 est ainsi placé dans une position où il interdit toute circulation du fluide caloporteur de la première boucle 4 vers la deuxième boucle 5. Le moyen d'arrêt 29 est quant à lui placé dans une position passante, où il autorise une circulation de fluide caloporteur à son travers et en direction de l'échangeur de chaleur intérieur 9.

La première pompe 7 et la source électrique de chaleur 8 sont ici activées. Les calories générées par la source électrique de chaleur 8 sont collectées par le fluide caloporteur et transportées vers l'échangeur de chaleur intérieur 9. Ce dernier dissipe ces calories dans le flux d'air intérieur 28 quand celui-ci traverse le corps de cet échangeur. Le flux d'air intérieur 28 ainsi chauffé est alors envoyé vers l'habitacle en vue de réaliser la fonction de chauffage de celui-ci.

On notera que la deuxième pompe 12 est inactive, empêchant ainsi tout échange thermique au niveau du premier échangeur 11 de composant électrique.

Le compresseur 18 est également rendu inactif, bloquant ainsi toute circulation de fluide réfrigérant au sein du circuit de fluide réfrigérant 2.

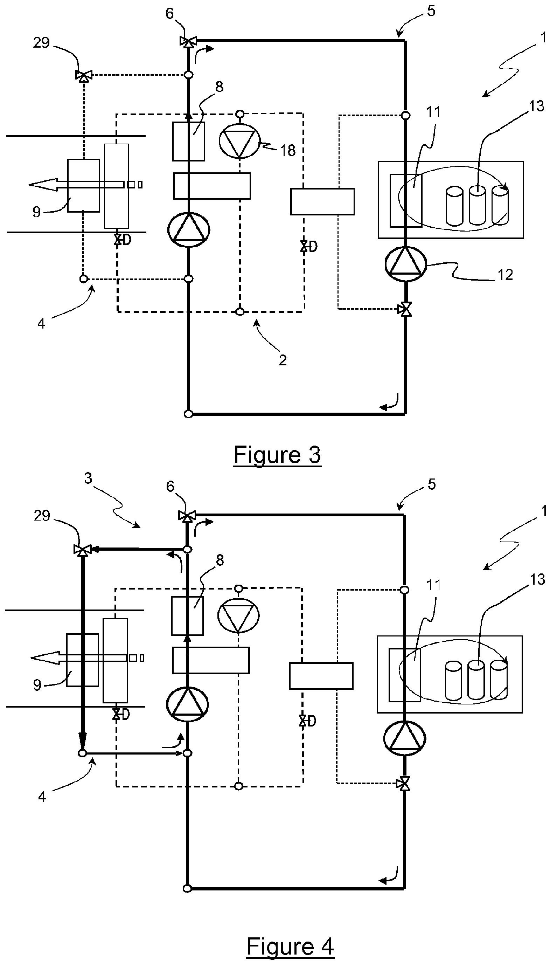

La figure 3 illustre le dispositif de conditionnement thermique 1 en un mode de chauffage exclusif de la ou des batteries 13. Une telle situation correspond au cas dans lequel la température de l'habitacle est au moins égale à la demande de l'utilisateur du véhicule, alors que la température de la batterie est en dessous d'une température seuil, nécessitant ainsi un apport de calories. Le premier dispositif d'interconnexion 6 est ainsi placé dans une position où il autorise une circulation de fluide caloporteur vers le premier échangeur 11 de composant électrique. Le moyen d'arrêt est quant à lui placé dans une position fermée, où il interdit une circulation de fluide caloporteur en direction de l'échangeur de chaleur intérieur 9.

La première pompe 7 et/ou la deuxième pompe 12 sont activées pour mettre en circulation le fluide caloporteur au sein de la deuxième boucle 5 de fluide caloporteur. La source électrique de chaleur 8 est ici la même source de chaleur que celle employée pour chauffer le flux d'air envoyé dans l'habitacle, et elle est également activée de manière à générer des calories.

Les calories générées par la source électrique de chaleur 8 sont collectées par le fluide caloporteur et transportées vers le premier échangeur 11 de composant électrique. Ce dernier dissipe ces calories dans un fluide référencé 30 qui assure un échange thermique entre le premier changeur 11 de composant électrique et la ou les batteries 13. Un tel fluide est par exemple de l'air, mais il peut également s'agir d'un fluide liquide.

La fonction de chauffage du composant de la chaîne de traction électrique du véhicule est ainsi assurée à l'aide d'un moyen simple, employé également pour chauffer l'habitacle.

Le compresseur 18 est inactif, bloquant ainsi toute circulation de fluide réfrigérant au sein du circuit de fluide réfrigérant 2.

La figure 4 montre le dispositif de conditionnement thermique 1 en un mode de chauffage combiné, en ce sens qu'il assure simultanément et au moyen d'une même source électrique de chaleur le chauffage de l'habitacle et le chauffage du composant de la chaîne de traction électrique, en l'occurrence la ou les batteries 13.

Une telle situation correspond au cas dans lequel la température de l'habitacle et la température du composant électrique de la chaîne de traction sont inférieures d'une part, à la demande de l'utilisateur du véhicule et d'autre part, au seuil de température minimal pour maintenir la fiabilité du composant, ici la batterie 13. Le premier dispositif d'interconnexion 6 est ainsi placé dans une position où il autorise une circulation de fluide caloporteur vers le premier échangeur 11 de composant électrique. Le moyen d'arrêt 29 est passant, de manière à autoriser une circulation du fluide caloporteur au sein de la première boucle 4 de fluide caloporteur.

La source électrique de chaleur 8 est activée de manière à dissiper des calories dans le fluide caloporteur et le circuit de fluide caloporteur 3 est agencé pour répartir ce fluide caloporteur chaud à la fois vers l'échangeur de chaleur intérieur 9 et vers le premier échangeur 11 de composant électrique.

La première pompe 7 et/ou la deuxième pompe 12 sont activées pour mettre en circulation le fluide caloporteur au sein de la première boucle 4 de fluide caloporteur et au sein de la deuxième boucle 5 de fluide caloporteur. La source électrique de chaleur 8 est ici la même source de chaleur qui fournit l'énergie pour chauffer l'habitacle et pour chauffer la ou les batteries 13.

Le compresseur 18 est inactif, bloquant ainsi toute circulation de fluide réfrigérant au sein du circuit de fluide réfrigérant 2.

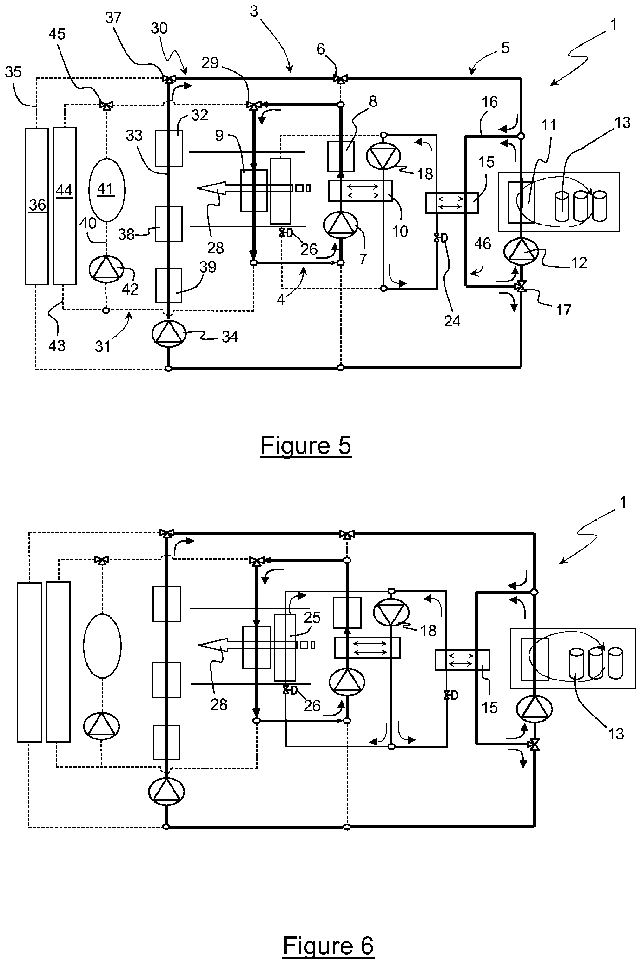

Les figures 5 à 8 montrent une première variante du dispositif de conditionnement thermique 1. Cette variante reprend la structure détaillée en référence aux figures 1 à 4 et complète celle-ci par l'ajout de composants électriques relatifs à la chaîne de traction électrique et des composants relatifs à une chaîne de traction thermique.

La description ci-dessous se limite à ces ajouts, et on se reportera à la description en référence aux figures 1 à 4 pour les éléments et leur organisation identiques.

Le circuit de fluide caloporteur 3 est complété par une troisième boucle 30 de fluide caloporteur et/ou une quatrième boucle 31 de fluide caloporteur.

La troisième boucle 30 de fluide caloporteur est installée en parallèle de la première boucle 4 de fluide caloporteur et de la deuxième boucle 5 de fluide caloporteur. Elle est raccordée au circuit de fluide caloporteur 3 au niveau du premier dispositif de connexion 6 et au niveau d'un point de raccordement situé entre la première pompe 7 et le deuxième point d'interconnexion 17.

Cette troisième boucle 30 de fluide caloporteur comprend au moins un deuxième échangeur 32 de composant électrique de la chaîne de traction électrique. Un tel deuxième échangeur échange thermiquement avec un composant électrique de la chaîne de traction électrique, ce composant étant, par exemple, le moteur électrique de traction, un convertisseur de courant électrique alternatif en courant électrique continu, ou un convertisseur de tension du courant électrique continu en courant électrique continu, ce dernier formant notamment un abaisseur de tension.

Ce deuxième échangeur 32 de composant électrique est un échangeur distinct du premier échangeur 11 de composant électrique. Il est installé dans un premier secteur 33 constitutif de la troisième boucle 30 de fluide caloporteur en série avec une troisième pompe 34, notamment électrique, qui assure la circulation de fluide caloporteur dans la troisième boucle 30.

De manière avantageuse, la troisième boucle 30 de fluide caloporteur comprend encore un troisième échangeur 38 de composant électrique et un quatrième échangeur 39 de composant électrique constitutifs de la chaîne de traction électrique.

A titre d'exemple préféré de réalisation, le premier échangeur 11 est affecté au conditionnement thermique d'au moins une batterie 13 de la chaîne de traction, le deuxième échangeur 32 est affecté au conditionnement thermique du moteur électrique de traction, le troisième échangeur 38 est affecté au conditionnement thermique du convertisseur de courant électrique alternatif en courant électrique continu et le quatrième échangeur 39 est affecté au convertisseur de tension du courant électrique continu en courant électrique continu, ce dernier formant un abaisseur de tension.

Cette troisième boucle 30 de fluide caloporteur comprend encore un deuxième secteur 35 comprenant un premier radiateur 36. Ce radiateur forme un échangeur thermique air/fluide caloporteur, et sa fonction est de dissiper dans l'air extérieur à l'habitacle des calories présentes dans le fluide caloporteur qui circule dans la troisième boucle 30 de fluide caloporteur.

On notera que le deuxième secteur 35 est en parallèle du premier secteur 33. Ces deux secteurs sont reliés l'un à l'autre par un troisième dispositif d'interconnexion 37 dont la fonction est de gérer la circulation de fluide caloporteur dans le premier secteur 33 et/ou dans le deuxième secteur 35. A titre d'exemple, il s'agit d'une vanne trois voies installée à une intersection entre le premier secteur 33 et le deuxième secteur 35. Il peut également s'agir de deux vannes deux voies chacune installées dans un secteur respectif. Enfin, le troisième dispositif d'interconnexion 37 peut prendre la forme d'une unique vanne deux voies installée dans le deuxième secteur 35.

La quatrième boucle 31 de fluide caloporteur est installée en parallèle de la première boucle 4 de fluide caloporteur. Elle est reliée à cette dernière par le moyen d'arrêt 29 et par un point de raccordement situé en aval de l'échangeur de chaleur intérieur 9 et en amont de la première pompe 7.

La quatrième boucle 31 de fluide caloporteur comprend au moins un moteur à combustion interne 41. On comprend de ceci que le fluide caloporteur circulant dans cette quatrième boucle circule au sein d'un circuit de refroidissement du moteur à combustion interne, notamment au travers de sa culasse.

Cette circulation est réalisée au moyen d'une première portion 40 de la quatrième boucle 31, dans laquelle sont installés en série le circuit de refroidissement du moteur à combustion interne 41 et une quatrième pompe 42 de circulation du fluide caloporteur dans la quatrième boucle 31. Une telle quatrième pompe peut être une pompe électrique. De manière alternative, il peut s'agir d'une pompe mécanique, c'est-à-dire entraînée par le moteur à combustion interne 41.

La quatrième boucle 31 de fluide caloporteur comprend encore une deuxième portion 43 dans laquelle est installé un deuxième radiateur 44, ce dernier formant un échangeur thermique air/fluide caloporteur. La fonction de ce deuxième radiateur 44 est de dissiper dans l'air extérieur à l'habitacle des calories présentes dans le fluide caloporteur qui circule dans la quatrième boucle 31 de fluide caloporteur.

La première portion 40 et la deuxième portion 43 sont installées en parallèle l'une par rapport à l'autre, et sont reliées l'une à l'autre d'une part, par un quatrième dispositif d'interconnexion 45 localisé en aval du moteur à combustion interne 41 et d'autre part, par un point de raccordement situé en amont de la quatrième pompe 42.

On va maintenant décrire le mode de fonctionnement représenté à la figure 5. Ce mode de fonctionnement correspond à un deuxième mode de chauffage de l'habitacle qui peut former une alternative ou un complément au premier mode de chauffage au moyen de la source électrique de chauffage 8, tel que décrit en référence aux figures 1 à 4.

Le circuit de fluide réfrigérant fonctionne en mode pompe à chaleur. Le compresseur 18 élève la pression et la température du fluide réfrigérant. Le fluide réfrigérant, dont la température et la pression ont été ainsi élevées, traverse le premier échangeur de chaleur fluide/fluide 10. Le fluide réfrigérant cède ainsi ses calories au fluide caloporteur qui circule au travers de ce premier échangeur de chaleur fluide/fluide 10. La mise en action de la première pompe 7 permet le transport de ces calories vers l'échangeur de chaleur intérieur 9 qui, à son tour, cède ces calories au flux d'air intérieur 28.

Le premier organe de régulation 24 est placé dans une position où il détend le fluide réfrigérant avant son entrée dans le deuxième échangeur de chaleur fluide/fluide 15, pour enfin retourner vers le compresseur 18.

Le deuxième organe de régulation 26 est placé dans une position fermée où il interdit une circulation de fluide réfrigérant vers l'évaporateur 25.

En ce qui concerne le circuit de fluide caloporteur 3, on constate que la première boucle 4 de fluide caloporteur est isolée de la deuxième boucle 5 et de la troisième boucle 30 de fluide caloporteur. Cette isolation est réalisée par le premier dispositif d'interconnexion 6 qui est placé dans une position où le fluide caloporteur présent dans la première boucle 4 ne rencontre pas le fluide réfrigérant présent dans la deuxième boucle 5.

Ce premier dispositif d'interconnexion 6 est également placé dans une position où il autorise un mélange du fluide caloporteur présent dans la deuxième boucle 5 avec celui présent dans la troisième boucle 30. La circulation du fluide caloporteur dans ces boucles est opérée par l'activation de l'une et/ou l'autre de la deuxième ou de la troisième pompe référencée respectivement 12 et 34.

Des calories collectées au niveau du deuxième échangeur 32 et/ou au niveau du troisième échangeur 38 et/ou au niveau du quatrième échangeur 39 sont transportées par le fluide caloporteur vers le deuxième échangeur de chaleur fluide/fluide 15.

Les calories générées au niveau du premier composant sont également collectées par le premier échangeur 11 et envoyées vers le deuxième échangeur de chaleur fluide/fluide 15.

Les calories ainsi présentes dans le fluide caloporteur qui circule dans la branche 16 sont cédées au fluide réfrigérant par le deuxième échangeur de chaleur fluide/fluide 15, ce qui contribue à élever sa température. Le premier échangeur de chaleur fluide/fluide 10 forme ainsi le point chaud du cycle de pompe à chaleur alors que le deuxième échangeur de chaleur fluide/fluide 15 forme le point froid de ce cycle. Les calories générées par les composants électriques de la chaîne de traction électrique sont ainsi astucieusement mises à profit pour augmenter l'efficacité du cycle thermodynamique.

On notera que le sens de circulation dans le sous-circuit 46 est opposé au sens de circulation du fluide caloporteur dans la deuxième boucle 5. Le fluide caloporteur arrivant du premier échangeur 11 de composant électrique se combine avec le fluide caloporteur arrivant en provenance du premier dispositif d'interconnexion 6 pour alimenter conjointement le deuxième échangeur de chaleur fluide/fluide 15.

Après passage du fluide caloporteur dans ce deuxième échangeur de chaleur fluide/fluide 15, le fluide caloporteur est scindé en deux par le deuxième dispositif d'interconnexion 17, une partie se dirigeant vers la deuxième pompe 12 et une autre partie vers la première pompe 7.

Selon ce mode de réalisation, il y a transfert d'énergie des échangeurs 15 et 10 vers l'échangeur intérieur 9.

La figure 6 montre la première variante du dispositif de conditionnement thermique 1 utilisé selon un troisième mode de chauffage de l'habitacle. On se reportera à la description détaillée de la figure 5, la description ci-dessous se limitant aux différences.

Ce troisième mode est un mode de récupération de la chaleur présente dans l'habitacle combiné au deuxième mode de chauffage détaillé ci-dessus. Dans ce troisième mode de chauffage, le deuxième organe de régulation 26 est placé dans une position où il assure une détente du fluide réfrigérant envoyé dans l'évaporateur 25. Le flux d'air intérieur 28 est ici un flux d'air recirculé, c'est-à-dire qui provient exclusivement ou en grande partie de l'habitacle. Dans un tel cas, ce flux d'air est chaud, ce qui contribue à chauffer le fluide réfrigérant qui circule dans l'évaporateur 25.

La partie de fluide réfrigérant ayant circulé dans l'évaporateur 25 se combine à la partie de fluide réfrigérant ayant circulée dans le deuxième échangeur de chaleur fluide/fluide 15 pour retourner vers le compresseur 18.

En plus de récupérer les calories générées par les composants électriques de la chaîne de traction électrique, ce mode de chauffage récupère les calories présentes dans le flux d'air intérieur, ce qui contribue à améliorer l'efficacité de la pompe à chaleur.

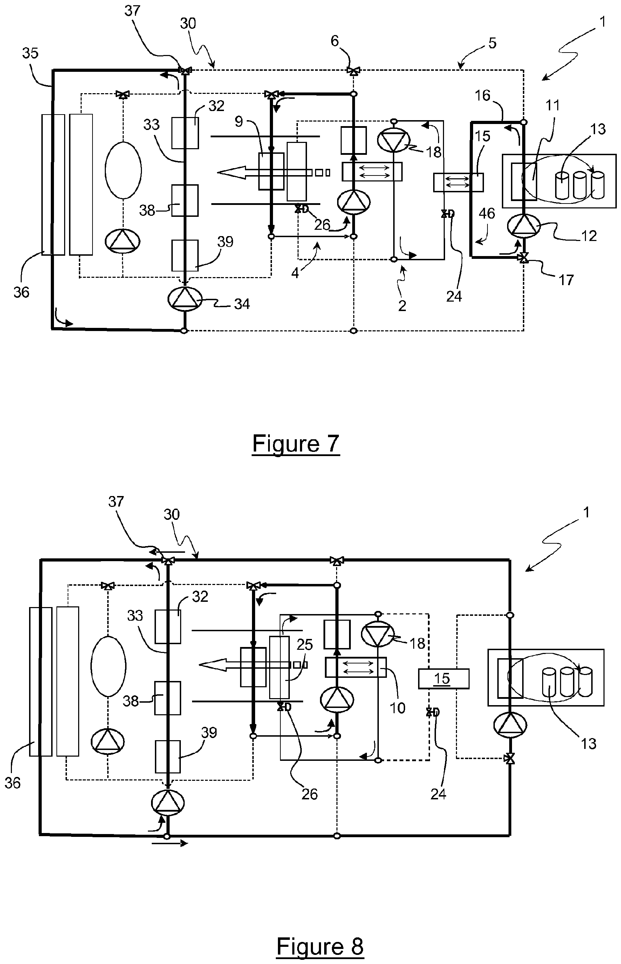

La figure 7 illustre la première variante du dispositif de conditionnement thermique 1 utilisé selon un quatrième mode de chauffage de l'habitacle.

Selon ce quatrième mode de chauffage, la troisième boucle 30 de fluide caloporteur est isolée de la deuxième boucle 5 de fluide caloporteur. Une telle isolation est réalisée par le troisième dispositif d'interconnexion 37 placé dans une position où il empêche un mélange du fluide caloporteur présent dans la troisième boucle 30 avec le fluide caloporteur présent dans la deuxième boucle 5 de fluide caloporteur.

Avantageusement, la troisième pompe 34 est activée pour que le fluide caloporteur circule dans le premier secteur 33, de manière à collecter les calories présentes au niveau du deuxième échangeur 32 et/ou au niveau du troisième échangeur 38 et/ou au niveau du quatrième échangeur 39. Cette circulation s'opère également dans le deuxième secteur et au travers du premier radiateur 36.

Il est ainsi possible de refroidir les composants électriques de la chaîne de traction électrique en dissipant les calories dans l'air extérieur à l'habitacle.

De manière identique aux modes présentés en référence aux figures 5 ou 6, la première boucle 4 de fluide caloporteur est isolée de la deuxième boucle 5 de fluide caloporteur.

Dans ce quatrième mode de chauffage, la deuxième boucle 5 est utilisée de manière partielle. En effet, le fluide caloporteur circule dans le sous-circuit 46 comprenant la deuxième pompe 12, le premier échangeur 11 de composant électrique et la branche 16. Une telle circulation est opérée par l'activation de la deuxième pompe 12 et par le fait que le deuxième dispositif d'interconnexion 17 est placé dans une position où il empêche le fluide caloporteur de se diriger vers le reste de la deuxième boucle 5 de fluide caloporteur, c'est-à-dire en direction de la troisième pompe 34.

Dans cette situation, le fluide caloporteur qui circule dans ce sous-circuit 46 collecte des calories au niveau du composant électrique, par exemple la batterie 13, et transporte vers le deuxième échangeur de chaleur fluide/fluide 15.

Le premier organe de régulation 24 est placé dans une position où il détend le fluide réfrigérant avant son entrée dans le deuxième échangeur de chaleur fluide/fluide 15, pour enfin retourner vers le compresseur 18.

Le deuxième organe de régulation 26 est placé dans une position fermée où il interdit une circulation de fluide réfrigérant vers l'évaporateur 25.

Les calories présentes dans le fluide caloporteur sont ainsi cédées au fluide réfrigérant pour former le point froid de la pompe à chaleur mise en oeuvre par le circuit de fluide réfrigérant 2. Le transfert de ces calories vers l'échangeur de chaleur intérieur 9 s'opère ensuite comme décrit ci-dessus et on se reportera à la description en référence à la figure 5 à ce sujet.

La figure 8 montre la première variante du dispositif de conditionnement thermique 1 utilisé selon un cinquième mode de chauffage. Ce cinquième mode de chauffage de l'habitacle est basé exclusivement sur une récupération des calories présentes dans le flux d'air intérieur 28.

Les composants électriques de la chaîne de traction électrique sont quant à eux mis en relation en vue de dissiper leurs calories dans le flux d'air extérieur à l'habitacle. Pour ce faire, la troisième boucle est mise en communication avec la deuxième boucle 5 de fluide caloporteur. Le troisième dispositif d'interconnexion 37 est placé dans une position où il autorise un mélange du fluide caloporteur en provenance de la deuxième boucle 5 avec le fluide caloporteur provenant du premier secteur 33.

Les calories collectées au niveau du premier échangeur 11 de composant électrique ainsi que les calories collectées au niveau du deuxième, troisième et quatrième échangeurs de composants électriques sont transférées au flux d'air extérieur par échange thermique dans le premier radiateur 36.

La première boucle 4 de fluide caloporteur est isolée de la deuxième boucle 5 de fluide caloporteur, de manière identique aux solutions détaillées en référence aux figures 5 à 7.

Le premier organe de régulation 24 est placé dans une position où il interdit la circulation de fluide réfrigérant vers le deuxième échangeur de chaleur fluide/fluide 15.

Le deuxième organe de régulation 26 est placé dans une position où il détend le fluide réfrigérant avant son entrée dans l'évaporateur 25, pour enfin retourner vers le compresseur 18. L'évaporateur 25 est traversé par un flux d'air intérieur recirculé, dont la température est plus élevée que la température du fluide réfrigérant à l'entrée de l'évaporateur 25.

L'évaporateur 25 forme ainsi le point froid de la pompe à chaleur alors que le premier échangeur de chaleur fluide/fluide 10 forme le point chaud de cette pompe à chaleur.

## Revendications

1. Dispositif de conditionnement thermique (1) d'un habitacle de véhicule et d'au moins un composant électrique (13) d'une chaîne de traction électrique dudit véhicule, comprenant un circuit de fluide caloporteur (3) parcouru par un fluide caloporteur et comprenant au moins
• une première boucle (4) de fluide caloporteur constituée au moins d'une première pompe (7), une source de chaleur et un échangeur de chaleur intérieur (9) apte à chauffer l'habitacle, et
• une deuxième boucle (5) de fluide caloporteur en parallèle de la première boucle (4) et interconnectée avec celle-ci par un premier dispositif d'interconnexion (6), la deuxième boucle (5) comprenant au moins un premier échangeur (11) du composant électrique (13),
la source de chaleur formant une même source de chaleur apte à chauffer le fluide caloporteur qui circule dans la première boucle (4) de fluide caloporteur et/ou dans la deuxième boucle (5) de fluide caloporteur,
ladite source de chaleur étant une source électrique de chaleur (8) qui est installée dans la première boucle (4) de fluide caloporteur immédiatement en amont du premier dispositif d'interconnexion (6),
ledit dispositif comprenant un circuit de fluide réfrigérant (2) parcouru par un fluide réfrigérant, le circuit de fluide réfrigérant (2) comprenant au moins un compresseur (18) et un évaporateur (25),
**caractérisé en ce que** le dispositif (1) comprend :
- un premier échangeur de chaleur fluide/fluide (10) installé dans le circuit de fluide réfrigérant (2) et dans la première boucle (4) de fluide caloporteur,
- un deuxième échangeur de chaleur fluide/fluide (15) installé dans le circuit de fluide réfrigérant (2) et dans la deuxième boucle (5) de fluide caloporteur.

2. Dispositif selon la revendication 1, dans lequel le premier échangeur de chaleur fluide/fluide (10) est agencé pour réaliser un échange thermique entre le fluide caloporteur circulant dans la première boucle (4) de fluide caloporteur et le fluide réfrigérant circulant dans le circuit de fluide réfrigérant (2).

3. Dispositif selon la revendication 1 ou 2, dans lequel le premier échangeur de chaleur fluide/fluide (10) est localisé dans la première boucle (4) de fluide caloporteur entre une sortie de la première pompe (7) et une entrée de la source électrique de chaleur (8).

4. Dispositif selon l'une quelconque des revendications 1 à 3, dans lequel le premier échangeur de chaleur fluide/fluide (10) est localisé dans le circuit de fluide réfrigérant (2) immédiatement en aval d'une sortie du compresseur (18).

5. Dispositif selon l'une quelconque des revendications 1 à 4, dans lequel le deuxième échangeur de chaleur fluide/fluide (15) est agencé pour réaliser un échange thermique entre le fluide caloporteur circulant dans la deuxième boucle (5) de fluide caloporteur et le fluide réfrigérant circulant dans le circuit de fluide réfrigérant (2).

6. Dispositif selon l'une quelconque des revendications 1 ou 5, dans lequel le deuxième échangeur de chaleur fluide/fluide (15) est installé dans une branche (16) de la deuxième boucle (5) en parallèle d'une portion de la deuxième boucle (5) qui comprend le premier échangeur (11) de composant électrique.

7. Dispositif selon l'une quelconque des revendications 1 ou 5 à 6, dans lequel la deuxième boucle (5) de fluide caloporteur comprend une deuxième pompe (12) installée en amont du premier échangeur (11) de composant électrique et en parallèle d'une branche (16) contenant le deuxième échangeur de chaleur fluide/fluide (15).

8. Dispositif selon la revendication 7, dans lequel la branche (16) est raccordée à une portion de la deuxième boucle (5) qui comprend le premier échangeur (11) de composant électrique par un deuxième dispositif d'interconnexion (17).

9. Dispositif selon la revendication 1, dans lequel le circuit de fluide réfrigérant (2) comprend une branche centrale (21) contenant le premier échangeur de chaleur fluide/fluide (10), une première branche latérale (22) contenant le deuxième échangeur de chaleur fluide/fluide (15) et une deuxième branche latérale (23) contenant l'évaporateur (25), la branche centrale (21), la première branche latérale (22) et la deuxième branche latérale (23) étant en parallèle.

10. Dispositif selon l'une quelconque des revendications précédentes, dans lequel est prévue une troisième boucle (30) de fluide caloporteur en parallèle de la deuxième boucle (5) de fluide caloporteur, ladite troisième boucle (30) de fluide caloporteur comprenant au moins un deuxième échangeur (32) de composant électrique de la chaîne de traction électrique.

11. Dispositif selon la revendication 10, dans lequel la troisième boucle (30) de fluide caloporteur comprend un premier secteur (33) dans lequel sont installés en série au moins le deuxième échangeur (32) de composant électrique et une troisième pompe (34), et un deuxième secteur (35) comprenant un premier radiateur (36), le premier secteur (33) étant en parallèle du deuxième secteur (35) et relié à celui-ci par un troisième dispositif d'interconnexion (37).

12. Dispositif selon l'une quelconque des revendications précédentes, dans lequel est prévue une quatrième boucle (31) de fluide caloporteur en parallèle de la première boucle (4) de fluide caloporteur, ladite quatrième boucle (31) comprenant au moins un circuit de refroidissement d'un moteur à combustion interne (41).

13. Dispositif selon la revendication 12, dans lequel la quatrième boucle (31) de fluide caloporteur comprend une première portion (40) dans lequel sont installés en série le circuit de refroidissement du moteur à combustion interne (41) et une quatrième pompe (42), et une deuxième portion (43) comprenant un deuxième radiateur (44), la deuxième portion (43) étant en parallèle de la première portion (40) et reliée à celle-ci par un quatrième dispositif d'interconnexion (45).

## Patentansprüche

1. Vorrichtung zur thermischen Konditionierung (1) eines Fahrzeuginnenraums und mindestens eines elektrischen Bauteils (13) eines elektrischen Antriebsstrangs des Fahrzeugs, die einen Wärmeträgerfluidkreislauf (3) enthält, der von einem Wärmeträgerfluid durchflossen wird und mindestens enthält
• einen ersten Wärmeträgerfluidkreis (4), der aus mindestens einer ersten Pumpe (7), einer Wärmequelle und einem inneren Wärmetauscher (9) besteht, der den Innenraum wärmen kann, und
• einen zweiten Wärmeträgerfluidkreis (5) parallel zum ersten Kreis (4) und mit diesem über eine erste Verbindungsvorrichtung (6) verbunden, wobei der zweite Kreis (5) mindestens einen ersten Tauscher (11) des elektrischen Bauteils (13) enthält,
wobei die Wärmequelle eine gleiche Wärmequelle bildet, die das Wärmeträgerfluid erwärmen kann, das im ersten Wärmeträgerfluidkreis (4) und/oder im zweiten Wärmeträgerfluidkreis (5) fließt,
wobei die Wärmequelle eine elektrische Wärmequelle (8) ist, die im ersten Wärmeträgerfluidkreis (4) direkt stromaufwärts vor der ersten Verbindungsvorrichtung (6) angeordnet ist,
wobei die Vorrichtung einen Kühlfluidkreislauf (2) enthält, der von einem Kühlfluid durchflossen wird, wobei der Kühlfluidkreislauf (2) mindestens einen Kompressor (18) und einen Verdampfer (25) enthält,
**dadurch gekennzeichnet, dass** die Vorrichtung (1) enthält:
- einen ersten Fluid/Fluid-Wärmetauscher (10), der in den Kühlfluidkreislauf (2) und in den ersten Wärmeträgerfluidkreis (4) eingebaut ist,
- einen zweiten Fluid/Fluid-Wärmetauscher (15), der in den Kühlfluidkreislauf (2) und in den zweiten Wärmeträgerfluidkreis (5) eingebaut ist.

2. Vorrichtung nach Anspruch 1, wobei der erste Fluid/Fluid-Wärmetauscher (10) eingerichtet ist, um einen Wärmeaustausch zwischen dem im ersten Wärmeträgerfluidkreis (4) fließenden Wärmeträgerfluid und dem im Kühlfluidkreislauf (2) fließenden Kühlfluid durchzuführen.

3. Vorrichtung nach Anspruch 1 oder 2, wobei der erste Fluid/Fluid-Wärmetauscher (10) im ersten Wärmeträgerfluidkreis (4) zwischen einem Ausgang der ersten Pumpe (7) und einem Eingang der elektrischen Wärmequelle (8) angeordnet ist.

4. Vorrichtung nach einem der Ansprüche 1 bis 3, wobei der erste Fluid/Fluid-Wärmetauscher (10) im Kühlfluidkreislauf (2) direkt stromabwärts hinter einem Ausgang des Kompressors (18) angeordnet ist.

5. Vorrichtung nach einem der Ansprüche 1 bis 4, wobei der zweite Fluid/Fluid-Wärmetauscher (15) eingerichtet ist, um einen Wärmeaustausch zwischen dem im zweiten Wärmeträgerfluidkreis (5) fließenden Wärmeträgerfluid und dem im Kühlfluidkreislauf (2) fließenden Kühlfluid durchzuführen.

6. Vorrichtung nach einem der Ansprüche 1 oder 5, wobei der zweite Fluid/Fluid-Wärmetauscher (15) in einem Zweig (16) des zweiten Kreises (5) parallel zu einem Abschnitt des zweiten Kreises (5) eingebaut ist, der den ersten Tauscher (11) eines elektrischen Bauteils enthält.

7. Vorrichtung nach einem der Ansprüche 1 oder 5 bis 6, wobei der zweite Wärmeträgerfluidkreis (5) eine zweite Pumpe (12) enthält, die stromaufwärts vor dem ersten Tauscher (11) eines elektrischen Bauteils und parallel zu einem den zweiten Fluid/Fluid-Wärmetauscher (15) enthaltenden Zweig (16) eingebaut ist.

8. Vorrichtung nach Anspruch 7, wobei der Zweig (16) durch eine zweite Verbindungsvorrichtung (17) an einen Abschnitt des zweiten Kreises (5) angeschlossen ist, der den ersten Tauscher (11) eines elektrischen Bauteils enthält.

9. Vorrichtung nach Anspruch 1, wobei der Kühlfluidkreislauf (2) einen zentralen Zweig (21), der den ersten Fluid/Fluid-Wärmetauscher (10) enthält, einen ersten Seitenzweig (22), der den zweiten Fluid/Fluid-Wärmetauscher (15) enthält, und einen zweiten Seitenzweig (23) enthält, der den Verdampfer (25) enthält, wobei der zentrale Zweig (21), der erste Seitenzweig (22) und der zweite Seitenzweig (23) parallel liegen.

10. Vorrichtung nach einem der vorhergehenden Ansprüche, wobei ein dritter Wärmeträgerfluidkreis (30) parallel zum zweiten Wärmeträgerfluidkreis (5) vorgesehen ist, wobei der dritte Wärmeträgerfluidkreis (30) mindestens einen zweiten Tauscher (32) eines elektrischen Bauteils des elektrischen Antriebsstrangs enthält.

11. Vorrichtung nach Anspruch 10, wobei der dritte Wärmeträgerfluidkreis (30) einen ersten Sektor (33), in den mindestens der zweite Tauscher (32) eines elektrischen Bauteils und eine dritte Pumpe (34) in Reihe eingebaut sind, und einen zweiten Sektor (35) enthält, der einen ersten Kühler (36) enthält, wobei der erste Sektor (33) parallel zum zweiten Sektor (35) liegt und mit diesem über eine dritte Verbindungsvorrichtung (37) verbunden ist.

12. Vorrichtung nach einem der vorhergehenden Ansprüche, wobei ein vierter Wärmeträgerfluidkreis (31) parallel zum ersten Wärmeträgerfluidkreis (4) vorgesehen ist, wobei der vierte Kreis (31) mindestens einen Kühlkreis eines Verbrennungsmotors (41) enthält.

13. Vorrichtung nach Anspruch 12, wobei der vierte Wärmeträgerfluidkreis (31) einen ersten Abschnitt (40), in den in Reihe der Kühlkreis des Verbrennungsmotors (41) und eine vierte Pumpe (42) eingebaut sind, und einen zweiten Abschnitt (43) enthält, der einen zweiten Kühler (44) enthält, wobei der zweite Abschnitt (43) parallel zum ersten Abschnitt (40) liegt und mit diesem über eine vierte Verbindungsvorrichtung (45) verbunden ist.

## Claims

1. Device (1) for the thermal management of a vehicle interior and of at least one electrical component (13) of an electric drivetrain of the said vehicle, comprising a heat-transfer fluid circuit (3) through which a heat-transfer fluid passes, and comprising at least
• a first heat-transfer fluid loop (4) made up of at least a first pump (7), a heat source and an internal heat exchanger (9) able to heat the vehicle interior, and
• a second heat-transfer fluid loop (5) in parallel with the first loop (4) and interconnected therewith via a first interconnection device (6), the second loop (5) comprising at least one first exchanger (11) for the electrical component (13),
the heat source forming one same heat source able to heat the heat-transfer fluid circulating in the first heat-transfer fluid loop (4) and/or in the second heat-transfer fluid loop (5),
the said heat source being an electrical heat source (8) which is installed in the first heat-transfer fluid loop (4) immediately upstream of the first interconnection device (6),
said device comprising a refrigerant fluid circuit (2) through which a refrigerant fluid passes, the refrigerant fluid circuit (2) comprising at least a compressor (18) and an evaporator (25),
**characterized in that** the device (1) comprises:
- a first fluid/fluid heat exchanger (10) installed in the refrigerant circuit (2) and in the first heat-transfer fluid loop (4),
- a second fluid/fluid heat exchanger (15) installed in the refrigerant fluid loop circuit (2) and in the second heat-transfer fluid loop (5) .

2. Device according to claim 1, in which the first fluid/fluid heat exchanger (10) is designed to perform an exchange of heat between the heat-transfer fluid circulating in the first heat-transfer fluid loop (4) and the refrigerant fluid circulating in the refrigerant fluid circuit (2).

3. Device according to claim 1 or 2, in which the first fluid/fluid heat exchanger (10) is located in the first heat-transfer fluid loop (4) between an outlet of the first pump (7) and an inlet of the electrical heat source (8) .

4. Device according to any one of claims 1 to 3, in which the first fluid/fluid heat exchanger (10) is located in the refrigerant fluid circuit (2) immediately downstream of an outlet of the compressor (18).

5. Device according to any one of claims 1 to 4, in which the second fluid/fluid heat exchanger (15) is designed to perform an exchange of heat between the heat-transfer fluid circulating in the second heat-transfer fluid loop (5) and the refrigerant fluid circulating in the refrigerant fluid circuit (2).

6. Device according to either one of claims 1 and 5, in which the second fluid/fluid heat exchanger (15) is installed in a leg (16) of the second loop (5) in parallel with a portion of the second loop (5) which comprises the first electrical component exchanger (11).

7. Device according to any one of claims 1 or 5 to 6, in which the second heat-transfer fluid loop (5) comprises a second pump (12) installed upstream of the first electrical component exchanger (11) and in parallel with a leg (16) containing the second fluid/fluid heat exchanger (15).

8. Device according to claim 7, in which the leg (16) is connected to a portion of the second loop (5) which comprises the first electrical component exchanger (11) via a second interconnection device (17).

9. Device according to claim 1, in which the refrigerant fluid circuit (2) comprises a central leg (21) containing the first fluid/fluid heat exchanger (10), a first lateral leg (22) containing the second fluid/fluid heat exchanger (15) and a second lateral leg (23) containing the evaporator (25), the central leg (21), the first lateral leg (22) and the second lateral leg (23) being in parallel.

10. Device according to any one of the preceding claims, in which a third heat-transfer fluid loop (30) is provided, in parallel with the second heat-transfer fluid loop (5), the said third heat-transfer fluid loop (30) comprising at least a second electric drivetrain electrical component exchanger (32).

11. Device according to claim 10, in which the third heat-transfer fluid loop (30) comprises a first sector (33) in which at least the second electrical component exchanger (32) and a third pump (34) are installed in series, and a second sector (35) comprising a first radiator (36), the first sector (33) being in parallel with the second sector (35) and connected thereto by a third interconnection device (37).

12. Device according to any one of the preceding claims, in which a fourth heat-transfer fluid loop (31) is provided, in parallel with the first heat-transfer fluid loop (4), the said fourth loop (31) comprising at least one cooling circuit for cooling an internal combustion engine (41).

13. Device according to claim 12, in which the fourth heat-transfer fluid loop (31) comprises a first portion (40) in which the cooling circuit for cooling the internal combustion engine (41) and a fourth pump (42) are installed in series, and a second portion (43) comprising a second radiator (44), the second portion (43) being in parallel with the first portion (40) and connected thereto by a fourth interconnection device (45) .
